(19)

Europäisches
Patentamt
European
Patent Office
Office européen
des brevets

(11) **EP 2 464 105 A1**

(12) **EUROPEAN PATENT APPLICATION**

(43) Date of publication:
**13.06.2012 Bulletin 2012/24**

(51) Int Cl.:
***H04N 5/783*** (2006.01)

(21) Application number: **10252070.7**

(22) Date of filing: **07.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **British Telecommunications Public
Limited Company
London EC1A 7AJ (GB)**

(72) Inventor: **The designation of the inventor has not
yet been filed**

(74) Representative: **Lau, Chi-Fai
BT Group Legal
Intellectual Property Department
PP C5A, BT Centre
81 Newgate Street
London
EC1A 7AJ (GB)**

(54) **Method and system for data management**

(57)    A preface generation technique that is usable for variable bit rate encoded data, although not exclusively, is described. In one embodiment the size of a preface that is required to allow immediate start-up is determined by examining the decoding schedule of a set of data, and finding the maximum shortfall between the decoding schedule and the predicted delivery rate of data over the network. The point at which the maximum shortfall occurs is also determined. A preface is then generated from data segments that occur prior to the point of maximum shortfall, with segments being selected to meet a decoding constraint that the number of bits in the preface at any point up to the maximum shortfall point should be at least equal to any shortfall between the decoding schedule and the delivery schedule. By meeting this constraint, continuous reproduction of the data can be ensured with no start-up delay, with the balance of the data not in the preface being delivered over the network. In some embodiments, data segments are further selected in accordance with the constraint that also allow some other functionality, such as trick play modes, to be performed.

Figure 3

**Description**

Technical Field

The present invention relates to a method and system for the management of data, that in particular embodiments determines parts of a set of data to be stored or sent to a local file store, the remainder of the set of data then being provided over a network when the set of data is required for use. In particular embodiments the set of data is encoded data, encoded at a variable bit rate.

Background to the Invention and Prior Art

There are many devices on the market today that are used for storing and consuming multimedia content such as films and video clips. These devices include the ubiquitous PC, as well as the increasingly common dedicated media servers, and more specialised devices such as personal video recorder (PVRs), IPTV platforms and set-top boxes (STBs). Most of these devices contain a hard disk for storage of media files. Whilst hard disks in some devices such as PCs can be upgraded, in other devices such as STBs the storage space is limited and cannot easily be upgraded through hardware. As such, compression technologies play an increasingly important role in dictating the amount of available/ free space remaining on consumer devices.

With the advent of high definition (HD) video, file sizes are spiralling upwards and occupying more and more storage space on devices. HD movies are in the order of Gigabytes per movie, which means that greater end storage capacity is required, or better compression, encoding, and data management techniques.

Existing compression or encoding techniques rely on incremental improvements on compression algorithms and content encoding systems. General purpose compression systems like zip, gzip, ARC and LZH provide means to compress general purpose data. Specific media encoding technologies like MPEG, WMV and VC1 for video files, and MP3, AAC, G.729 and AMR for audio files are commonly used and allow data to be encoded into a format that reduces the size of the original media (e.g. RGB and YUV for video, PCM for audio). In addition, content files so encoded are difficult for general compression systems to further compress.

Techniques for compressing file/disk space (e.g. Double Disk, Stacker, Drive Space etc) use general purpose file compression techniques in the pursuit of virtually increasing disk storage at the expense of further compressing files and media. These techniques suffer the same problems as the general purpose compression systems. They are also computationally intensive, and thus slow the operation of the system down upon both compression and later decompression

Ultimately, however, there will almost always be more possible content that a user may wish to access than his (or her) device is able to store. As such, network based delivery systems of content such as video or audio data are becoming more prevalent, to increase the amount of content available to users. However, delivery of content files such as video files over a network on-demand is not without significant difficulties, particularly in view of network related problems such as latency, jitter, and limited bandwidth. Hence, it is rare that it is possible to reserve enough network bandwidth with a high enough quality of service in terms of guaranteed latency and jitter to enable a whole video file to be streamed to a user's content reproduction device on-demand when required, and to provide for seamless reproduction with little or no start-up delay.

One known solution to the above problem for constant bit rate encoded files is described in EP 0 658 055. Here, if a video file is not immediately available in local storage, a "preface" of the video file is immediately transferred to the local cache. The preface is a predetermined initial portion of the video file having a playback duration just long enough to balance the time required to transfer the remainder of the video file over the network to the local cache with the time to play back the entire video file. The size of the preface is calculated in accordance with the formula:

$$\text{Size}_{\text{Preface}} = \text{Size}_X * (\text{Rate}_{\text{Playback}} - \text{Rate}_{\text{Transfer}}) / \text{Rate}_{\text{Playback}} \qquad (1)$$

where $\text{Size}_{\text{preface}}$ is the size of the preface, $\text{Size}_x$ is the size of the video files, $\text{Rate}_{\text{playback}}$ is the constant decoding rate of the video file, and $\text{Rate}_{\text{transfer}}$ is the constant transfer rate of the network.

In other words, the prior art assumes that the video file to be transferred was encoded at constant bit rate and that it was divided into a single preface at the beginning of the file and a single balance at the end of the file. Then, if the encoded bit rate of the file is R, the throughput of the constrained network between the end user system and the network server storing the whole of the video file is C, the size of the whole video file is F, then the amount of the file that can be transferred, B, is given by:

$$B = F * C / R \qquad (2)$$

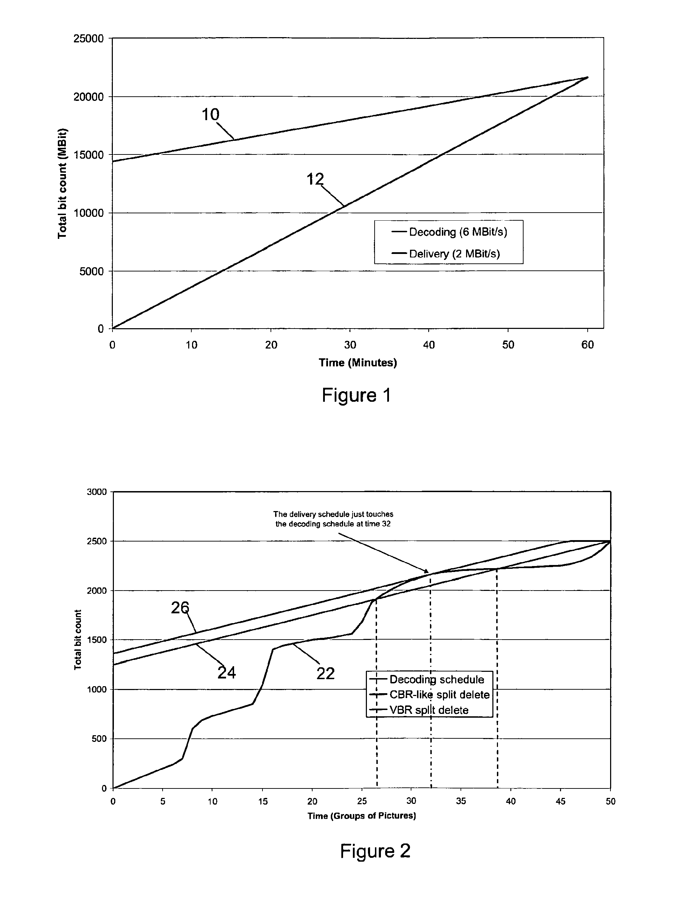

A graphical illustration of this, shown in Figure 1, can be created by plotting cumulative bits on the vertical axis of a graph and time on the horizontal axis. A cumulative bit decoding schedule 12 can be drawn as a straight line through the origin with slope R: this would indicate how many bits would have been decoded at any given time if decoding started at the beginning of the file at time zero, and decoding is at a constant rate. A bit delivery schedule 10 may also be drawn on this graph. If bits can only be delivered at rate C, where C < R, then the delivery schedule is a straight line of slope C, which must not at any time be below the bit decoding schedule as this would indicate bits had not been delivered by the time that they had to be decoded to achieve continuous play out of the video. In this case the optimal delivery schedule can be drawn as the straight line of slope C that intercepts with the decoding schedule at the point in time at which all of the bits have been decoded (i.e. at the end of the line segment). The point at which this delivery schedule intercepts the time-equals-zero vertical axis indicates how many bits must already be at the receiver when play out starts in order to ensure that all bits can be delivered in time for decoding. This is given by:

$$Preface = F - B \qquad (3)$$

which, substituting in (2), gives (1) above.

While many video streams are described as being encoded at constant bit rate, this is only strictly the case when the bit rate is measured over a given period of time, such as over ten seconds or more, that is sufficient for the actual bit rate to average out. This is because video is generally encoded with a mixture of picture types: intra pictures (or I pictures) are coded without reference to other pictures and are useful for providing random access, but require a large number of bits to achieve a given quality; predicted pictures (or P pictures) are coded relative to a single other I or P picture and require less bits than an I picture for a given quality; and bi-directionally predicted (or B pictures) are often coded relative to two other pictures and require less bits than a P picture for a given quality. In addition, the amount of detail or movement present in a picture determines how difficult it is to compress, and even with constant bit rate coding, an unequal number of bits can be used to code pictures so as to achieve a more consistent picture quality, with a buffer of coded bits providing the smoothing function necessary to achieve constant bit rate transmission.

The situation is even more complicated with some video coding standards, where it is blocks of pixels within pictures that make use of one or more predictions, with the actual reference pictures that are used being allowed to vary from block to block; in addition, P blocks can be present in B pictures, and I blocks can be present in P and B pictures.

If a video file is sufficiently long that it is possible to ignore the variations in the number of bits used to code each picture and treat the file as being homogeneous so that the video file can be considered as truly constant bit rate, then the arrangement of the prior art may be used. However, for many video files it is not possible to make this assumption, because the video file really is coded at variable bit rate. In addition, the prior art arrangement provides a single preface, from the start of the file. However, such a constraint may not be suitable in all cases. Therefore, alternative preface size determination and selection mechanisms are required.

Summary of the Invention

Embodiments of the invention address the above problems by providing a preface generation technique that is usable for variable bit rate encoded data, although not exclusively. In one embodiment the size of a preface that is required to allow immediate start-up is determined by examining the decoding schedule of a set of data, and finding the maximum shortfall between the decoding schedule and the predicted delivery rate of data over the network. The point at which the maximum shortfall occurs is also determined. A preface is then generated from data segments that occur prior to the point of maximum shortfall, with segments being selected to meet a decoding constraint that the number of bits in the preface at any point up to the maximum shortfall point should be at least equal to any shortfall between the decoding schedule and the delivery schedule. By meeting this constraint, continuous reproduction of the data can be ensured with no start-up delay, with the balance of the data not in the preface being delivered over the network. In some embodiments, data segments are further selected in accordance with the decoding constraint that also allow some other functionality, such as trick play modes, to be performed.

In view of the above, one aspect of the invention provides a method of data management, comprising: determining a decoding schedule ($B(n)$) and a network delivery schedule ($D(n)$) for a set of data; identifying a maximum difference between the decoding schedule and the delivery schedule and the last point in the decoding schedule at which the maximum difference occurs; generating a preface by including in the preface one or more segments of data that sum to at least the identified maximum difference, the segments of data being selected to meet a constraint that the sum of bits to be included in the preface up to any point in the decoding schedule before the last point of maximum difference should be at least equal to the difference between the decoding schedule and delivery schedule at that point; and providing the generated preface for storage.

In some embodiments the set of data is variable bit rate encoded. Hence, preface calculation and determination can also be performed for VBR encoded data, that allows for immediate reproduction and timely decoding of VBR content.

In some embodiments the generated preface is stored at a local device and is available for immediate reproduction, wherein when the set of data is to be reproduced, the segments of data stored in the preface are reproduced from local storage, with the balance of the set of data not in the preface being delivered over a network. Hence, in such embodiments only the preface need be stored locally, and hence storage requirements for content is lessened, or conversely, more content can be made immediately available to a user, by storing prefaces of an increased number of sets of data.

In some embodiments the preface comprises plural segments from plural parts of the set of data. In particular we have found that the preface need not be from the start of the set of data, but can be from multiple parts, provided the decoding constraint noted above is met. This then allows the segments for the preface to be further selected in order to allow an additional function to be performed.

For example, in one embodiment the set of data is encoded video data, and the segments are further selected to permit a trick play function to be performed. That is, in more detail, the segments selected for inclusion in the preface include intra-frame encoded video frames. The intra-frame encoded video frames can be decoded and displayed by themselves, and hence allow for trick play modes such as fast forward or fast reverse to be performed.

In another example embodiment the set of data is encoded video data, and the segments are further selected such that the video frames in the segments cannot be reproduced independently without other video frames being made available. This provides advantages in that that data that is held in the preface is held more securely in that is cannot be reproduced meaningfully by itself, and a form of content security is thereby provided. For example, the video frames in the segments may be bi-predictive (B) and/or predictive (P) frames, that require an I frame, for example, as a reference picture.

In one embodiment those segments of the set of data not included in the preface may be deleted from storage. This frees up storage capacity, so that more sets of data (content) can be made available to the user, for example by storing additional prefaces of other data sets in place of the deleted balance.

In one embodiment, the generated preface may be provided for storage by pushing the generated preface to a client device over a network. With such an arrangement a preface can be generated at a content server, and provided to a client. This saves the client from having to calculate the preface itself.

In another aspect there is provided a method of data management, comprising: determining a decoding schedule ($B(n)$) for a set of data; selecting one of plurality of possible delivery schedules; identifying a maximum difference between the decoding schedule and the selected delivery schedule and the last point in the decoding schedule at which the maximum difference occurs; generating meta-data that identifies segments of the set of data to be included in a preface that sum to at least the identified maximum difference, the identified segments of data being selected to meet a constraint that the sum of bits to be included in the preface up to any point in the decoding schedule before the last point of maximum difference should be at least equal to the difference between the decoding schedule and selected delivery schedule at that point; and providing the generated meta-data for storage.

In this aspect, instead of generating the preface itself, meta data is generated that identifies those segments of the set of data that would form a preface, for a particular network bit rate or delivery schedule. Thus, sets of meta data can be generated for a whole range of possible delivery schedules, which can then be used when needed to actually generate a preface dependent on the network rate available at the prevailing time. As the meta data is of smaller size than the preface itself, data storage advantages are provided. In addition, the meta data may be provided over a network to a client, which is more bandwidth efficient than providing multiple different prefaces for the same set of data. In an embodiment the client may then build a preface from the set of data by including in the preface those data segments of the set of data identified by the generated meta-data when required.

A further aspect of the invention provides a system for data management, the system comprising: a preface size determination module configured in use to identify a maximum difference between a decoding schedule and a delivery schedule for a set of data, and the last point in the decoding schedule at which the maximum difference occurs; and a preface generation module configured in use to: i) generate a preface by including in the preface one or more segments of data that sum to at least the identified maximum difference, the segments of data being selected to meet a constraint that the sum of bits to be included in the preface up to any point in the decoding schedule before the last point of maximum difference should be at least equal to the difference between the decoding schedule and delivery schedule at that point; and ii) provide the generated preface for storage.

In addition, another aspect provides an apparatus for data management, comprising: means for determining a decoding schedule (B(n)) and a network delivery schedule (D(n)) for a set of data; means for identifying a maximum difference between the decoding schedule and the delivery schedule and the last point in the decoding schedule at which the maximum difference occurs; means for generating a preface by including in the preface one or more segments of data that sum to at least the identified maximum difference, the segments of data being selected to meet a constraint that the sum of bits to be included in the preface up to any point in the decoding schedule before the last point of maximum difference should be at least equal to the difference between the decoding schedule and delivery schedule at that point; and means for providing the generated preface for storage.

Description of the Drawings

Further features and advantages will become apparent from the following description of embodiments thereof, presented by way of example only, and by reference to the accompanying drawings, wherein:

Figure 1 is a graph illustrating preface calculation of the prior art;
Figures 2, 3, 4, 7, 8, 9, and 10 are graphs illustrating various preface size calculations used in embodiments of the invention;
Figure 5 is a block diagram of a preface size calculation module of an embodiment of the invention;
Figure 6 is a flow diagram illustrating the steps involved in calculating a preface size in an embodiment of the invention;
Figure 11 is a block diagram of a preface generator module of an embodiment of the invention;
Figure 12 is a flow diagram illustrating the steps involved in generating a preface in an embodiment of the invention;
Figure 13 is a block diagram illustrating a typical system architecture that provides a platform for embodiments of the invention;
Figure 14 is a flow diagram illustrating the steps involved in a first embodiment of the invention;
Figure 15 is a flow diagram illustrating the steps involved in a first embodiment of the invention; and
Figure 16 is a flow diagram illustrating the steps involved in a first embodiment of the invention.

Description of the Embodiments

Embodiments of the invention provide two main functions: i) the determination of the size of a preface of a data file to be retained or delivered to local storage when the data is encoded with a variable bit rate; and ii) once the size of the preface has been determined, the selection of which segments of a data file should be included in the preface. In this second respect, within embodiments of the invention selection of the segments of a data file to be included in the preface can lead to further functionality. For example, in one embodiment in the case of a video file as the data file then by including I frames in the preface various forms of trick play such as fast forward or rewind may be enabled, using the data stored locally. In addition, the content may also be viewed starting from almost any time point (corresponding to an available I frame) in the data.

Alternatively, for example, in another embodiment only B or P frames may be stored in the preface. This would mean that content was available locally that could not then be reproduced, as the I frames would typically be required. Hence a form of content protection would be provided, in that only once the I frames had been delivered over the network could the B and P frames stored locally in the preface then be properly reproduced.

It should be noted that within the present description we use the term "preface" in the same manner as in the introduction, in that it is a part of a set of data that is provided in advance and available locally to a data reproduction device such that it may be immediately reproduced. The balance of the set of data to allow complete data reproduction would then typically be provided to the device over a network, whilst reproduction is being undertaken. Preface size determination for variable bit rate data will be described next, followed by discussion of various embodiments relating to which data is included in the preface, to achieve additional functionality. There will then follow description of three particular embodiments based upon a typical content distribution system architecture that forms a platform for embodiments of the invention.

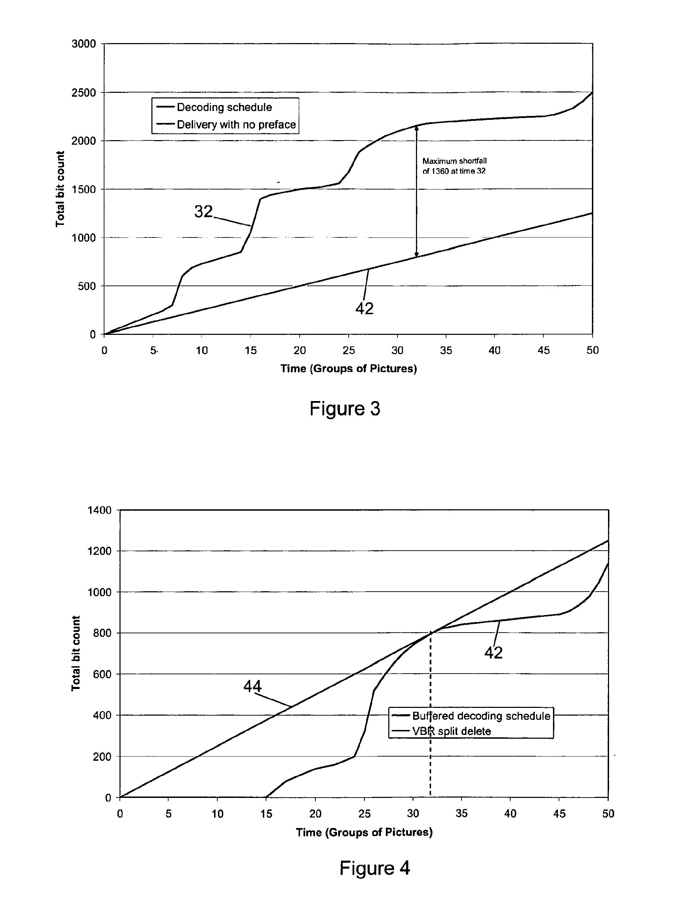

Preface size determination in embodiments of the invention will be described with respect to the examples in Figures 2 and 3. In Figure 2, the line 22 is the decoding schedule, showing how many bits are needed by each time in order to prevent the decoder stalling: for homogeneous constant bit rate coding, this would be a straight line. The line 24 shows delivery as described in the prior art, as applied to homogeneous constant bit rate coding; here the delivery rate is half of the average bit rate of the video stream, by way of example. In this case delivery is not timely between times t=27 and t=38 (shown by the vertical dotted lines), with a peak short fall of 110 units of bits. Hence to ensure timely delivery, the preface must be increased from 1250 units (half the file size) to 1360 units i.e. by the shortfall of 110 bits. As the same total number of bits need to be delivered, either the delivery rate can be eased off after time t=32 (shown by the dot-dash line), or delivery can simply end before play-out finishes (as shown in the figure). With such a preface, the delivery schedule then becomes as shown in line 26, which can then be seen just touching the decoding schedule at time t=32.

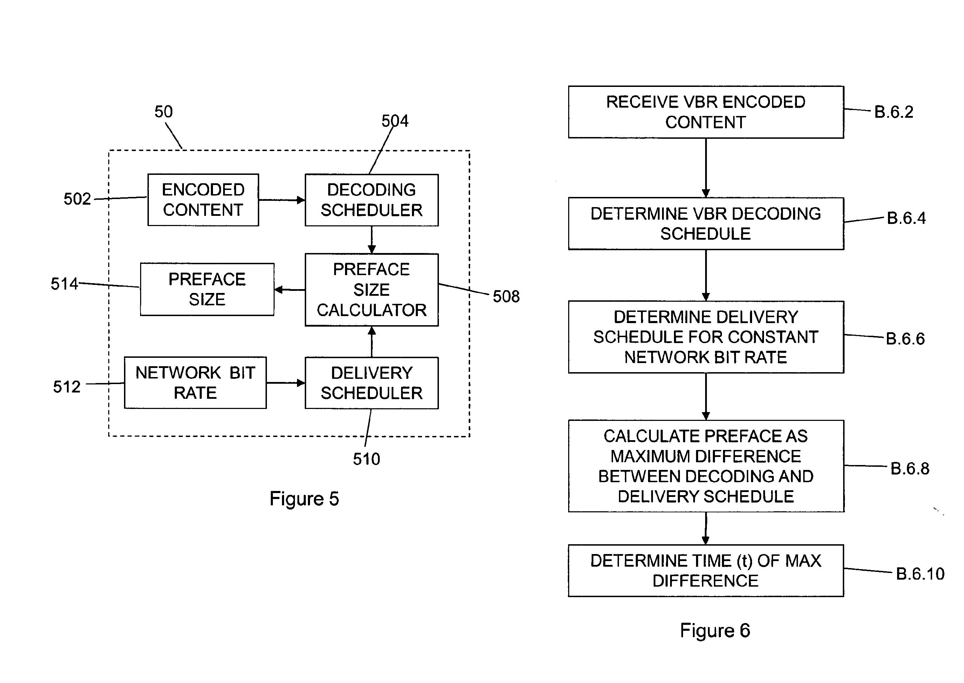

Following from the above, Figure 5 illustrates a block diagram of a preface size calculator module 50 that may be used in embodiments of the invention. The preface size calculator module 50 receives as an input a data file, such as encoded content 502, which may be a video or audio file, or the like. A decoding scheduler 504 is arranged to examine the encoded content 502 and determine the decoding schedule B(n) of the encoded content, being the number of bits that are decoded with respect to a time base such as actual time, or number of picture frames, or Groups of Pictures. The determined decoding schedule information is then passed to a preface size calculator 508.

Also provided in the preface size calculation module 50 is a delivery scheduler 510. This receives information relating to the sustainable network bit rate 512 that may be reserved in the network for delivery of the data file from a file server to a client in a local data reproducing or storage device local to the user (such as a set-top box). In the present example it is assumed that the network data rate is a constant rate R. The determined delivery schedule i.e., the data rate R is also passed to the preface size calculator 508, which is then able to calculate the preface size required, as described below, and shown further in Figures 3 and 6.

More particularly, with reference to Figures 3, 5, and 6, the preface size calculation module including the preface size calculator operates as follows:

1. Receive the VBR encoded content (B.6.2)
2. Calculate the decoding schedule for the video stream, by adding up how many bits are needed for each coding unit (picture, group of pictures or whatever, but typically each picture) (B.6.4). As described, this is performed by the decoding scheduler 504, and in the example of Figure 3 results in decoding schedule 32.
3. Calculate the delivery schedule with the known delivery rate, C, assuming that there is no preface, that is, starting the delivery schedule at the origin (B.6.6). As described, this is performed by the delivery scheduler 510, and in the example of Figure 3 gives delivery schedule 42.
4. Calculate the maximum short fall as the maximum (vertical) difference between the decoding schedule and the delivery schedule (B.6.8). This difference is determined by the preface size calculator 508, in dependence on the decoding schedule and the delivery schedule. In the example of Figure 3 the maximum shortfall between the decoding schedule 32 and the delivery schedule 42 is 1360 bits.
5. This determined maximum is the size of the preface required, and data 514 representing the preface size may then be output from the preface size calculation module.
6. Finally, it is also necessary to know the position in the data file of the maximum shortfall. This is determined at B.6.10 as timebase point t, and is output with the preface size information. If there are two points in the decoding schedule with the same maximum shortfall, then the timebase point t that is selected is the later of the two points. In the example of Figure 3, the maximum shortfall of 1360 bits occurs at timebase point t = 32.

With regards to this latter point, knowing the timebase point t (which may be measured in actual time, or number of picture frames, or number of Groups of Pictures; in the example of Figure 3 it is measured in number of Groups of Pictures) at which the maximum shortfall last occurs (or only occurs, if it occurs only once) is necessary so that the correct data segments can be included in the preface. In this respect, by definition for time points in the decoding schedule after the last maximum shortfall point the delivery rate R of the network should be sufficient to deliver the required segments of the data file in time for reproduction. Therefore, the preface should include data segments (picture frames, in the case of a video file, for example) from time points in the time base before the determined time point t, as it is this data that is contributing to the shortfall between the delivery schedule and the decoding schedule, and hence needs to be provided in advance. Therefore, the above procedure provides not only the preface size for VBR data, but also an indication of what data segments of a data file must be included in the preface.

In order to more precisely determine what data segments should be included in the preface, using simulations we have studied the effect of putting different data in the preface, other than the data at the beginning of the video file. As noted, to minimise the total size of the preface there is no benefit in storing data in the preface that is to be decoded after the only or last point at which the delivery schedule just touches the decoding schedule, as from this point onwards the video data can be delivered sufficiently quickly over the network as to require no data to be retained locally.

We studied two cases, the first where predominantly pictures encoded with a small number of bits are stored in the preface and the second where predominantly pictures encoded with a large number of bits are stored in the preface. In both cases we found there was no change in the size of the preface required compared to the preface required when the preface consisted of data at the beginning of the video file.

Figures 4, 7, and 8 illustrate this result. In these graphs, the decoding schedule has been drawn as the decoding schedule for the bits that need to be delivered over the network, with bits that have been retained locally not being shown at all. Figure 4 illustrates the case used in the prior art, where all the bits in the preface are taken from the start of the file. Line 42 represents the decoding schedule for bits that need to be delivered over the network, and line 44 represents the delivery schedule itself.

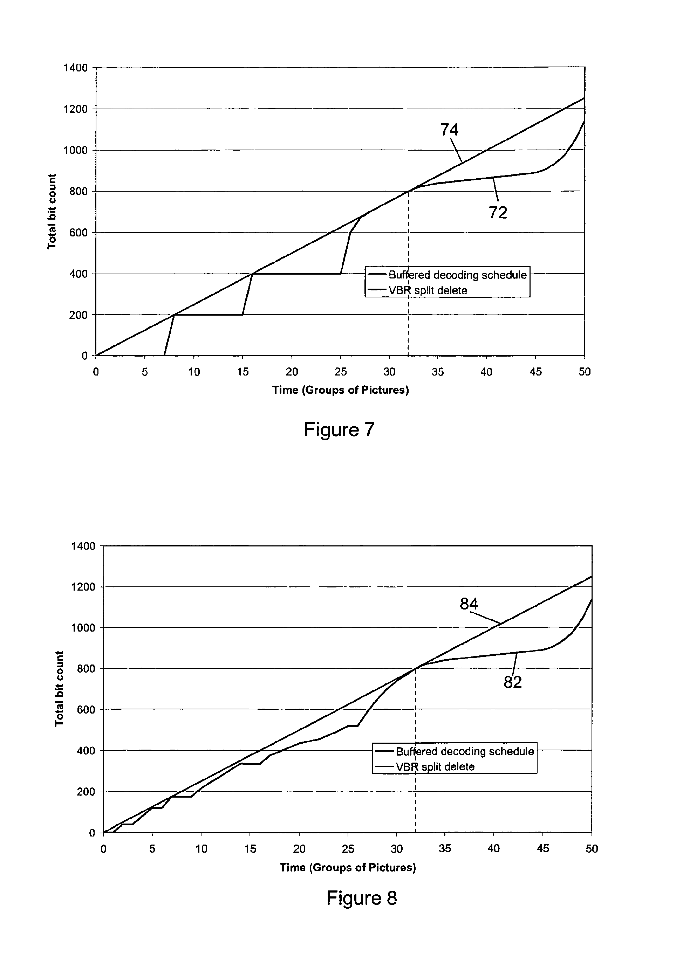

Figure 7 illustrates the case where pictures encoded with a small number of bits are stored in the preface. Here, line 72 is the decoding schedule for bits that need to be delivered over the network, which in this case would be bits belonging to frames with a large number of bits (hence the steep gradient between the flat regions representing decoding of pictures whose bits are stored in the preface). Line 74 is the delivery schedule.

Figure 8 illustrates the case where pictures encoded with a large number of bits are stored in the preface in this case, bits belonging to pictures encoded with a small number of bits are then delivered over the network. Line 82 is the decoding schedule for the bits delivered over the network belonging to the pictures encoded with a small number of bits - hence the gradient of the decoding schedule is generally shallower and more regular than in the previous case.

As will be seen, in all three cases it can be seen that 800 units of data must be delivered by timebase t=32 (see dashed line) for timely delivery of the data, i.e. the delivery and decoding schedules just touch in the same place in each of the three cases.

This result can be confirmed mathematically as follows. Let $B(n)$ be the decoding schedule, such that $B(n)$ units of data are decoded by timebase (or picture, or GoP) $n$. Let $D(n)$ be a delivery schedule that is just sufficient to deliver all bits in time for decoding, that is $D(n) >= B(n)$ for all n of the video sequence (i.e. from 0 to the end of the sequence). Let $D(n)$ be written as the sum of a preface of data, P, and delivery at the constant rate R:

$$D(n) = P + (R * n) \qquad (4)$$

Let N be the largest (or only) value of n for which $D(n) = B(n)$. This corresponds to the (last) point at which the decoding schedule just touches the delivery schedule i.e. the (last) point of maximum shortfall.

Now, instead of a preface consisting of the first bits of video data in the file, consider it to be made up of bits of video data from various parts of the file, where $p(n)$ bits are present in the preface which are needed for decoding at time n. The decoding schedule for bits that need to be delivered over the network, as in the three charts immediately above, $B'(n)$, is then given by

$$B'(n) = B(n) - \text{sum (i=0 to n) } p(n) \qquad (5)$$

The delivery schedule is given by $D'(n)$ where

$$D'(n) = R * n \qquad (6)$$

Timely delivery requires $D'(n) >= B'(n)$ for all n in the video sequence. Hence

$$R * n >= B(n) - \text{sum (i=0 to n) } p(n) \qquad (7)$$

And hence

$$\text{sum (i=0 to n) p(n) >= B(n) – (R * n)} \qquad\qquad (8)$$

Now observing that as D(n) >= B(n),

$$P >= B(n) – (R * n) \qquad\qquad (9)$$

These latter two inequalities, (8) and (9), give identical lower bounds on the initial (prior art) preface P and the sum of partial prefaces p(n). Note that the largest value of the right hand sides occurs for n = N, and hence that the size of any partial preface p(n) for n > N does not affect the required sum of partial prefaces for n <= N.

As a consequence of the above we can conclude that the total size of partial prefaces need not be greater than a single initial preface, but also that there are restrictions, given by the inequality (8), sum (i=0 to n) p(n) >= B(n) - (R * n), that apply to the distribution of preface bits over time. That is, when building a preface, the above inequality (8) should be met by the bits in the preface, for all points of the decoding schedule up to the determined timebase point t.

Hence the size of the preface can not be reduced for a given delivery rate by careful selection of which data is actually stored in it. This means that we can choose which data to store locally (the preface) and which data to deliver when the data set is to be consumed (the balance) to satisfy some other requirements, while having no impact on the size of the preface, provided that the data that is included in the preface is before the only or last point at which the decoding schedule just touches the delivery schedule, and also meets the constraint set by inequality (8) above. That is, in embodiments of the invention, once the size of the preface has been determined as described above, and provided the constraint is met that data in the preface must be taken from the part of the data file that occurs before the (last) timebase point t at which the delivery schedule coincides with the decoding schedule i.e. the (last) point of maximum shortfall between the decoding schedule and the delivery schedule, and that for each point before this timebase point t the sum of the bits to be included in the preface is greater than or equal to the difference between the decoding rate and the delivery rate, then what data segments are included in the preface can be additionally selected in order to provide additional functionality, as described next.

For example, in one embodiment, in order to support a limited set of fast forward and fast reverse modes, we may choose to retain I frames in the preface where possible and choose to include in the balance (that part to be delivered over the network) B and P pictures. The I frames could then be used to support fast forward and fast reverse trick play modes.

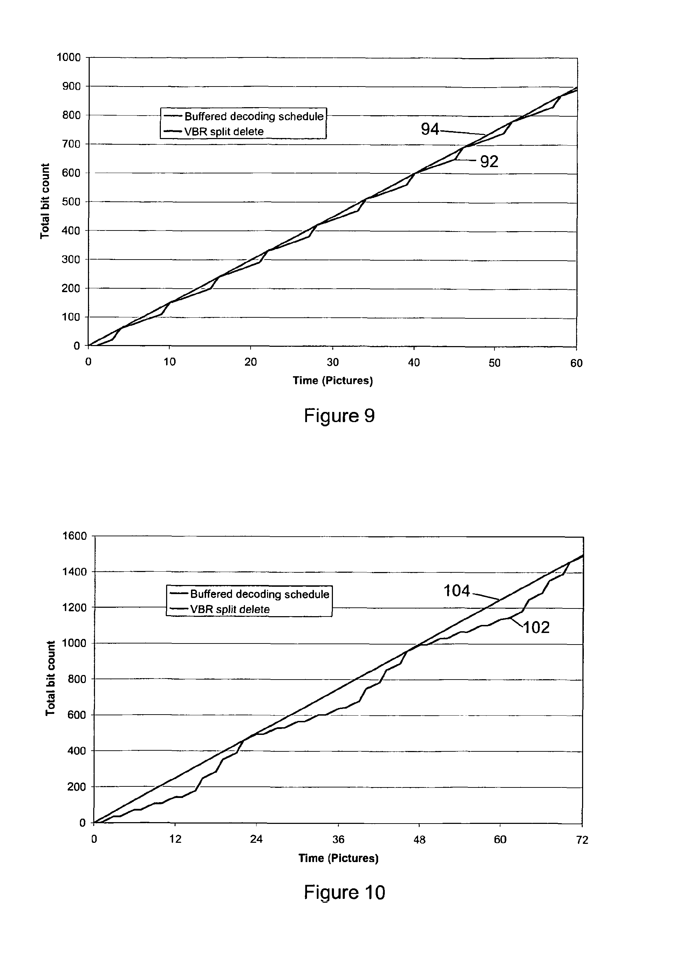

In more detail consider the following example embodiment with reference to Figure 9. In Figure 9 line 94 represents the delivery schedule, and line 92 represents the decoding schedule of bits that need to be delivered over the network, assuming the preface to be described below.

In the example of Figure 9 assume that each group of pictures (GoP) has a length of 6 frames, IBBPBB, in which an I frame has 100 units of bits, a P frame 40, and a B frame 10, making each group of pictures 180, and the average bit rate 30 per picture. Each group of pictures is identical. It is assumed that the video stream can only be delivered at half its average rate, i.e. at 15 units per picture. The stream consists of 10 groups of pictures, 1800 units of bits in total, implying a preface of 900 units (incorrectly) assuming uniformity.

The preface in fact only needs to be 910 units, and timely delivery can be achieved by storing all of the first I frame and 90% of all remaining I frames in the preface. That is, including the first I frame and 90% of the remaining I frames satisfies the inequality (8) above, and hence ensures timely decoding. Figure 9 then shows the decoding and delivery schedules in this case, from which it can be seen that the data representing the P and B frames, and the remaining 10% of the I frames, can be timely delivered in time for reproduction. However, by storing a slightly larger preface consisting of all of the I frames, full trick mode functionality can be achieved, including instant play-out from any I frame to the end of the stream.

In another example embodiment, shown in Figure 10, each group of pictures may have length 24 frames, IBBPBBPBBPBBPBBPBBPBB, in which an I frame has 229 units, a P frame 69, and a B frame 18, making each group of pictures 1000, and the average bit rate 41.67 per picture. Each group of pictures is identical. It is again assumed for the purposes of this example that the video stream can only be delivered at half its average rate, i.e. at 20.83 units per picture. The stream consists of 3 groups of pictures, 3000 units of bits in total, implying a preface of 1500 units (incorrectly) assuming uniformity.

The preface in fact only needs to be 1506 units, and timely delivery can be (approximately) achieved by storing all of the I frames and the first 5 P frames of each group of pictures (of the 7 in total). Figure 10 shows the decoding and delivery schedules in this case, where line 102 is the decoding schedule of data to be delivered over the network, and line 104 is the delivery schedule. As will be seen, by storing the I frames and the first 5 P frames of each GoP in the preface, then the delivery schedule is able to timely deliver the remaining frames of each GoP. Moreover, in this case enhanced trick mode is possible using the data stored locally in the preface, as the presence of most of the P frames in the preface would allow smooth presentation of low speed trick modes: for example three times fast forward can be achieved by decoding and displaying the I and P frames. Also instant play-out from any I frame to the end of the stream is supported.

A further embodiment makes use of hierarchical B frame coding. The concept of hierarchical B frame coding is to divide the source pictures into a hierarchy and then to code them from the highest level down to the lowest. This naturally gives temporal scalability (i.e. varying frame rate). As an example, consider a group of pictures to be 8 pictures. Picture 0 would be coded first as an I frame. Next picture 8 is coded as an I frame (these are in different groups of pictures). Then picture 4 is coded as a B frame with pictures 0 and 8 as references. Then pictures 2 and 6 are coded with the earlier pictures as references. Then the odd number pictures are coded as conventional B frames with potentially any of the earlier frames as references, but usually the neighbouring ones. Decoding can be terminated after receiving any number of these layers, and correct pictures can be displayed but at a lower picture rate than the full sequence. By placing these higher layers in the preface, smooth fast forward and reverse can be achieved. The lower layers in the hierarchy can then be included in the balance for delivery over the network.

In a further embodiment, other effects other than trick play modes can be obtained, by including in the preface different data. For example, the preface can include B or P frames, either hierarchically encoded or not. Such B or P frames cannot generally be decoded by themselves, as they require reference frames such as I frames to generate a complete image. Therefore, by including B or P frames in the preface, but not I frames, a form of content security can be implemented for the content that is to be stored locally in the preface, in that it cannot be reproduced until the I frames are delivered in the balance over the network.

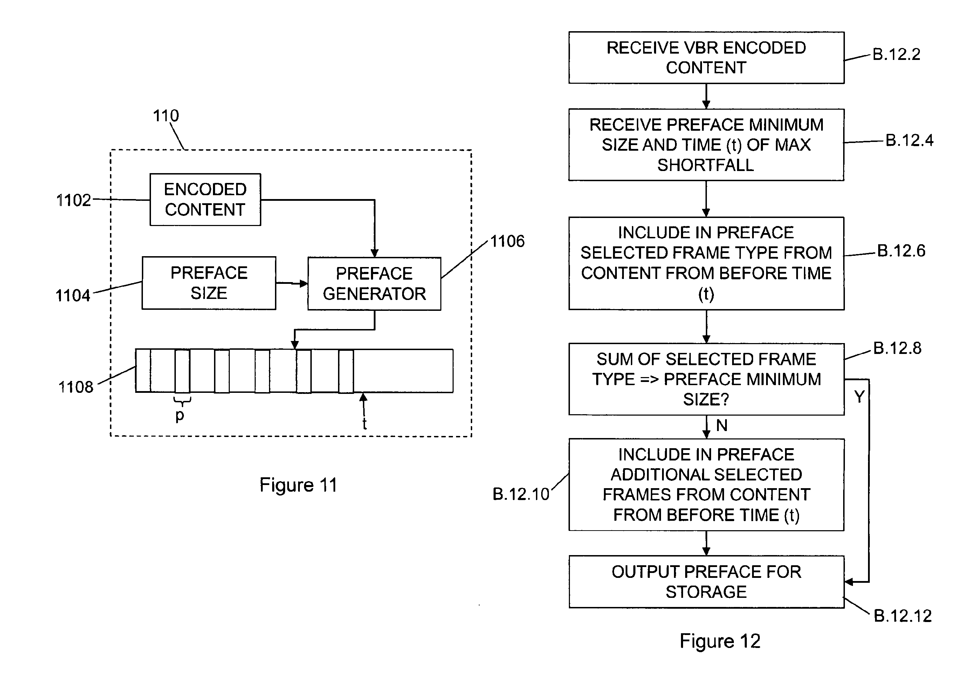

These methods of splitting a stream into a preface and a balance may be implemented in embodiments of the invention as shown in Figures 11 and 12. Figure 11 in particular shows a preface generator module 110, comprising a preface generator 1106. The preface generator 1106 may, for example, be a software module running on a computing device such as a general purpose computer. The preface generator 1106 receives a (video) data file such as the encoded content 1102, from which the preface is to be generated. Included with this is meta-data relating to the decoding schedule B(n) of the encoded content. In addition, preface size data, and timebase point t data 1104, generated by the preface size calculation module 50 are received. In addition, the preface generator is programmed to include in the preface particular types of frame from the data file, depending on the additional functionality to be achieved. The examples given above are examples of the types of frames that may be included in the preface, depending on the encoding, and the functionality to be obtained. Given the encoded content (and its decoding schedule) and the preface size data, the preface generator then generates the preface 1108, which as shown may comprise segments of data p taken from the part of the data file from before the timebase point t. As noted, the segments chosen and their contents are selected in order to meet the constraint that at any point in the decoding schedule before the timebase point t, the sum of the preface bits up to that point is at least equal to or greater than the difference between the cumulative number of decoded bits given by the decoding schedule and the amount of bits that will have been delivered up to the point. In addition, within this constraint the segments are then chosen depending on the additional functionality e.g. trick play to be obtained.

The preface generator module operates as shown in Figure 12. Firstly, at B.12.2 the module receives the VBR encoded content 1102 (including meta data relating to the decoding schedule B(n)), and then at B.12.4 receives the minimum size of preface required, and the timebase point t. At B.12.6 the preface generator then includes in the preface the frame types required, depending on the constraints mentioned above and the functionality to be obtained, and the GoP structure, as described in the examples above. For example, for a GoP frame structure IBBBPBBB, the preface generator may include in the preface every I frame from each GoP in the data file before the timebase point t, in order to enable trick play.

At B 12.8 an evaluation is performed as to whether the data that has been included in the preface so far adds up to the preface minimum size. If it does, then no further data need be included, and the preface can be outputted at B.12.12 for local storage. If the preface minimum size is not met, then at B.12.10 additional data such as additional frames are included in the preface. For example, P frames may be included in the preface, to enable additional trick play modes. These additional frames should be taken from those parts of the data file before the timebase point t, as it is only data from before this point that contributes to the decoding schedule-delivery schedule shortfall that the preface is trying to make up. That is, if inclusion of every I frame does not provide sufficient data in the preface to meet the decoding constraint (8), then additional data from the GoPs, or some of the GoPs, such as the P frames, can then be included, in order to ensure that constraint (8) is met.

Once the preface minimum size and the decoding constraint (8) has been met, then the preface can be output for local storage. In some examples, in addition to the required data in the preface, the I pictures after the timebase point t could also be retained locally, although this would increase the size of the retained data, but would have the benefit of all I pictures being held locally and being available to support fast forward and fast reverse throughout the whole of the video file.

With the above, therefore, for a data file such as a video file, a preface size can be found that takes into account the possible variable decoding rate of the data. In finding the preface size we also determine which data should be included in the preface, in that it should be segments of the data file from before the (last) point of maximum difference between the decoding schedule and the delivery schedule of data over the network, and then further selected to meet the decoding constraint that the sum of preface bits at any point before the point of maximum different should be at least equal to the difference between the decoding schedule and delivery rate at that point. Having determined the preface size, and from where in the file data segments should be included to meet the decoding constraint, particular data segments can then be selected to obtain additional functionality, such as to implement trick play modes such as fast forward and reverse, or to provide for content security. The operating concepts of the embodiments described thus far may be deployed in several different parts of a network based content distribution system, as will be described next.

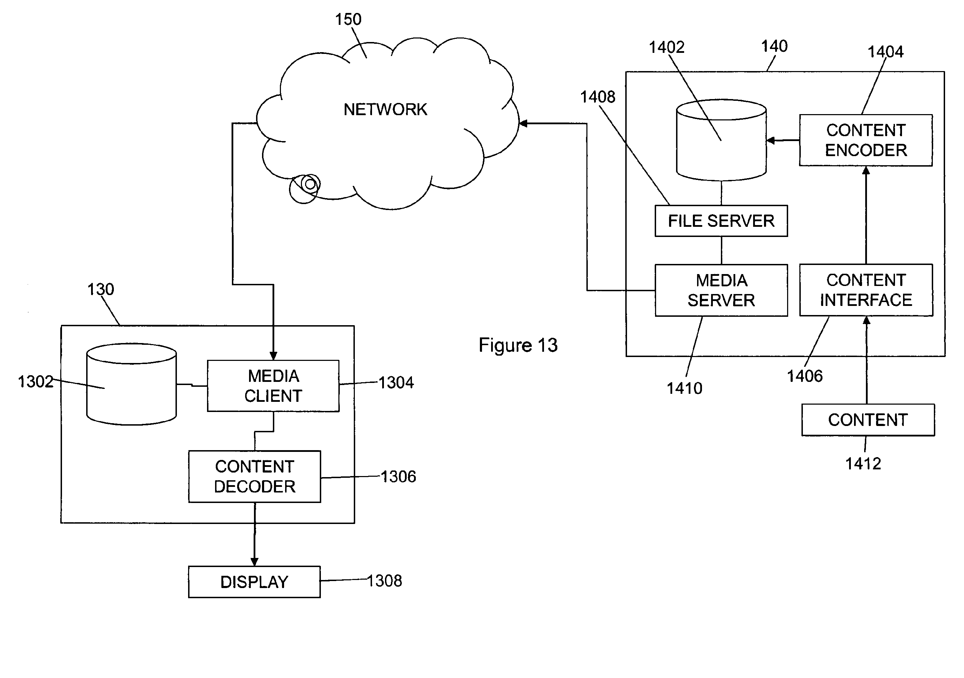

Figure 13 shows an example network based content distribution system that may provide a platform for embodiments of the invention. Within the system generally a content server 140 provides content via a network 150 to a user client device 130, which may for example be a set-top box, a user PC, or the like. The content server 140 comprises a mass data storage device such as a hard disk or array of hard disks, on which encoded content can be stored, for delivery over the network 150 to the user client device 130 for reproduction. A content encoder 1404 may also be provided, which can received un-encoded content 1412 via a content interface, and encode the content 1412 in accordance with appropriate content encoding algorithms. For example, in the case of video content, the content encoder may encode the received content in accordance with any of the MPEG standards, or other AVC standards such as H.264. Content encoded by the content encoder 1404 is stored on the mass data storage device 1402.

The mass data storage device is controlled by a file server 1408, which organises the encoded content data stored thereon, and provides content on demand for a media server 1410. The media server 1410 receives user requests for content from the user client device 130, and streams content via the network 150 to a media client 1304 in the user client device 130.

As noted, the user client device 130 comprises a media client 1304 that receives content data from the media server 1410 via the network 150. The device 130 is also provided with a mass data storage device 1302, such as a hard disk drive, on which received data can be stored. It will be appreciated that the capacity of the data storage device 1302 is significantly less (typically by orders of magnitude) than that of the data storage device 1402 in the content server 140. The device 130 is also provided with a content decoder 1306 which is able to decode and reproduce the content, such as audio and/or video content, and to output the decoded content to a reproducing device, such as display 1308 (in the case of video content).

It will be appreciated by the intended reader that the user client device may be embodied by many known device types, such as a set top box, personal computer, smartphone, tablet, portable media player, internet enabled TV, or the like. Likewise, the content server 140 will typically be a high-specification network enabled server-based computer system.

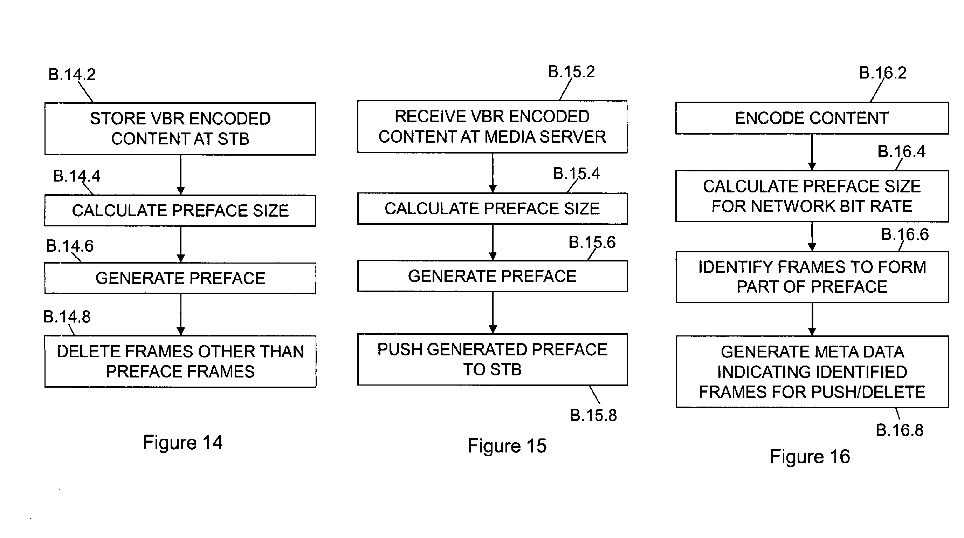

Embodiments of the invention may be provided by several parts of the above system. For example, in one embodiment the media client 1304 in the user client device may include the preface size calculation module, and the preface generation module for the purpose of deleting parts of content files received via the network 150 other than a preface that is retained. The purpose of such segment deletion is in order to maximise storage capacity on the hard disk 1302. Figure 14 illustrates the operation of such an arrangement.

More particularly, in this embodiment assume that the user client device 130 has received a complete video data file, which is stored on disk drive 1302. It is therefore locally stored, and is available for immediate reproduction and output by content decoder 1306 to display 1308. However, the data file will take up a significant part of the capacity of drive 1302, and hence to free up capacity the media client 1304 decides to delete some parts of the data file. In order to retain the capacity for immediate playback, however, some parts of the file must be kept as a preface, to be reproduced whilst the deleted parts (the balance) are being re-delivered over the network from the content server 140.

In order to implement such an arrangements, as shown in Figure 14 the media client 1304 uses the preface size calculation module at B.14.4 to calculate a preface size that must be retained locally. This size is calculated in dependence on the decoding schedule of the data file, and the network data rate. The preface generator module is then used to identify which segments of the data file should be retained in the preface, at B.14.6. As described previously, as well as being chosen to allow local reproduction to take place whilst the balance is being delivered, the individual segments of the preface can be chosen to implement trick play functions (for example by including the I and/or P frames of groups of pictures), or to secure the content from being reproduced without the balance being provided over the network. Once the preface segments have been identified, the segments of the data file other than the preface segments are then deleted from the storage 1302, at B.14.8, thus freeing up storage capacity on the drive 1302, whilst maintaining the ability to immediately reproduce the content, with timely delivery of the deleted balance over the network 150.

As well as being implemented in the user client device 130, in a further embodiment the content server 140 may make use of the preface size calculator module, and the preface generator module, as previously described. More particularly, the media server 1410 may comprise the preface size calculator module and the preface generator module, which are then used by the media server 1410 to generate a preface of a data file which can then be pushed to the media client 1304 in the user client device 130 for storage. Figure 15 shows further details.

Here at block 15.2 variable bit rate encoded content to be pushed is received at the media server 1410 from the file server 1408. The media server then uses the preface size calculation module at B.15.4 to generate the preface size in dependence on the variable decoding schedule for the content, and the network bit rate. In this respect, as described, the preface size will be equal to the maximum shortfall between the decoding schedule and the delivery schedule, and the preface should then include segments from the data file from before the timebase point t in the decoding schedule of the data file where this maximum shortfall last occurs. The preface generator module is then used at B.15.6 to generate the preface in order to meet this condition, and also to provide any additional functionality required, such as trick play, or to secure the contents of the preface from reproduction without the balance. Once the preface has been produced, at B.15.8 the media server 1410 may then push the preface to the media client 1304 at the user client device 130, for storage on the mass storage device 1302.

With such an arrangement, therefore, a preface of a data file is pushed to the client device for storage, and is then available at the client device to support immediate reproduction on demand, with the balance being delivered in a timely manner to support that reproduction.

A further embodiment involves the content encoder 1404. In this embodiment, the content encoder additionally or alternatively contains the preface size calculation module and the preface generation module, for use during the encoding of content. In this embodiment, however, a preface is not itself generated, and instead meta data indicating which frames to include in a preface for one or more network bit rates is instead generated, as shown in Figure 16.

In more detail, in this embodiment at B.16.2 the content encoder encodes content passed to it in the usual way. After encoding of the content, the encoded data file is then processed by the preface size generation module at B.16.4 to determine, for one or more possible network bit rates, the size of preface that would be required for each possible bit rate. For each preface size that is calculated, the preface generator then identifies segments of the encoded data file at B.16.6 that would form part of a preface of each size. However, at this stage no such preface is generated, and instead meta data identifying the segments is instead generated, at B.16.8. This meta data is then stored with the encoded content, and may be used in the future to generate prefaces for particular network bit rates as required. For example, if the media server decides to push the encoded content file to the user, then at that time the network bit rate is determined, and the correct set of meta data is looked up. The meta data indicates which segments of the file to include in a preface, and such a preface can then be built and pushed to the client device 130. In another embodiment, the meta data may be provided to the media client in the client device, and then used by the media client to select which segments of a content file to delete, in dependence on a data rate measured at the client.

Of course, instead of making use of meta data, in a variant the content encoder may simply generate multiple prefaces for the possible different network bit rates, that are then stored with the complete file. The disadvantage of such an arrangement is that more storage is then required, but if storage capacity is not a problem then such an arrangement can be more advantageous than storing meta-data, as the prefaces are then immediately available.

In a final embodiment to be described, we consider the application of the preface size calculation and preface generation techniques to a "chunk" of data of arbitrary size, which can then allow random access to any part of a data file, whilst still providing the storage advantages of storing a preface locally, and having the balance delivered on demand over a network. Note that in this embodiment this additional functionality of random access can be provided for a video stream that is encoded at constant bit rate or at variable bit rate.

In this embodiment we consider the video stream to be encoded into chunks, each of which begins with an I picture which provides for random access to that point in the video file. The other pictures in the chunk may be I, P or B pictures in any combination. A chunk may be what is commonly known as a group of pictures, typically one I picture followed by a number of P and B pictures, or may be a sequence of such groups of pictures, or may be any combination of pictures provided that the first is an I picture that can be used to provide random access.

Note in some video compression standards, such as ITU-T Recommendation H.264, an I picture may not provide for random access in all cases as subsequent P and B pictures may make reference to pictures that appeared in the coded bitstream before the I picture.

In this embodiment we consider each chunk in turn and, for each chunk independently, determine how much of the data comprising that chunk must be retained locally (i.e. be in its preface) in order to be able to deliver the remainder of that chunk over the network sufficiently quickly to allow continuous play out of that chunk starting at the beginning of that chunk. This is performed in the present embodiment by the preface size calculation module, described previously, and this size data is then used by the preface generation module operating at the level of the chunk to generate a preface for the chunk. By doing this for each chunk, we are able to provide random access at the start of each chunk. More data could be retained for a given chunk, but that would not reduce the amount of data required to be retained for any other chunk if random access is to be provided at every chunk (which is how a chunk is defined).

However, as explained earlier, retaining additional data for a chunk could be beneficial for providing trick modes. For example, it is possible that the size of preface required for a chunk may be less than the size of the I frames that provides random access. In this case if all of the data for the I frame is not retained, it would not be possible to provide fast forward and fast reverse from only the local data: additional data would be required from the remote content server 140. While in theory there would be sufficient network bandwidth to be able to provide this additional data, there could be practical issues of achieving it, as data for each incomplete I frames required for a given trick mode session would have to be requested from the server and then delivered in a timely fashion.

In one embodiment, therefore, I frames can be used effectively to provide fast trick modes but often can not be used effectively for slower trick modes. For example, when each chunk contains 12 pictures of video coded at 25 pictures per second, by displaying each I frame twice, a speed up factor of six can be achieved, either forwards or backwards. By displaying only some of the I frames, faster speed up factors can be achieved. But to achieve slower trick mode speeds, such as twice normal speed, additional pictures are needed to provide smoother motion. This can be achieved by retaining more pictures locally from each chunk.

For example, in one embodiment suppose that we wish to support twice normal speed fast forward and the video is coded with a chunk being a group of pictures with the structure IBBPBBPBBPBB, with a chunk consisting of one I frame, three P frames and 8 B frames. By decoding only the I and P frames, and displaying the four pictures during six picture time periods by appropriately repeating fields or frames, a speed up factor of two can be achieved. By decoding the four pictures and playing them out in reverse order, twice normal speed backward play can be achieved.

Thus, random access of any video file can be obtained by dividing the file up into suitably sized "chunks" that provide random access entry points. By treating each chunk as an individual data file and processing it to determine individual preface size and contents as described herein, and then building a preface within the determined constraints, it becomes possible to provide random access into any point of a complete data file such as a video data file, whilst also obtaining the storage benefits of only needing to store a portion of the data file, in the form of the segments of the file included in the determined individual prefaces. The individual balances are then supplied over the network, as described previously.

Various modifications whether by way of addition, deletion, or substitution may be made to the above described embodiments to provide further embodiments, any and all of which are intended to be encompassed by the appended claims.

**Claims**

1. A method of data management, comprising:

   determining a decoding schedule and a network delivery schedule for a set of data;
   identifying a maximum difference between the decoding schedule and the delivery schedule and the last point in the decoding schedule at which the maximum difference occurs;
   generating a preface by including in the preface one or more segments of data that sum to at least the identified maximum difference, the segments of data being selected to meet a constraint that the sum of bits to be included in the preface up to any point in the decoding schedule before the last point of maximum difference should be at least equal to the difference between the decoding schedule and delivery schedule at that point; and
   providing the generated preface for storage.

2. A method according to claim 1, wherein the set of data is variable bit rate encoded.

3. A method according to claims 1 or 2, wherein the generated preface is stored at a local device and is available for immediate reproduction, wherein when the set of data is to be reproduced, the segments of data stored in the preface are reproduced from local storage, with the balance of the set of data not in the preface being delivered over a network.

4. A method according to any of the preceding claims, wherein the preface comprises plural segments from plural parts of the set of data.

5. A method according to any of the preceding claims, wherein the segments are further selected in order to allow an additional function to be performed.

6. A method according to claim 5, wherein the set of data is encoded video data, and the segments are further selected to permit a trick play function to be performed.

7. A method according to claim 6, wherein the segments selected for inclusion in the preface include intra-frame encoded video frames, whereby to allow trick play video modes to be performed.

8. A method according to claim 5, wherein the set of data is encoded video data, and the segments are further selected such that the video frames in the segments cannot be reproduced independently without other video frames being made available.

9. A method according to claim 8, wherein the video frames in the segments are bi-predictive (B) and/or predictive (P) frames.

10. A method according to any of the preceding claims, and further comprising deleting those segments of the set of data not included in the preface from storage.

11. A method according to any of the preceding claims, wherein the providing the generated preface for storage comprises pushing the generated preface to a client device over a network.

12. A method of data management, comprising:

determining a decoding schedule for a set of data;
selecting one of a plurality of possible network delivery schedules;
identifying a maximum difference between the decoding schedule and the selected delivery schedule and the last point in the decoding schedule at which the maximum difference occurs;
generating meta-data that identifies segments of the set of data to be included in a preface that sum to at least the identified maximum difference, the identified segments of data being selected to meet a constraint that the sum of bits to be included in the preface up to any point in the decoding schedule before the last point of maximum difference should be at least equal to the difference between the decoding schedule and the selected delivery schedule at that point; and
providing the generated meta-data for storage.

13. A method according to claim 12, and further comprising building the preface from the set of data by including in the preface those data segments of the set of data identified by the generated meta-data.

14. A system for data management, the system comprising:

a preface size determination module configured in use to identify a maximum difference between a decoding schedule and a delivery schedule for a set of data, and the last point in the decoding schedule at which the maximum difference occurs; and
a preface generation module configured in use to:

i) generate a preface by including in the preface one or more segments of data that sum to at least the identified maximum difference, the segments of data being selected to meet a constraint that the sum of bits to be included in the preface up to any point in the decoding schedule before the last point of maximum difference should be at least equal to the difference between the decoding schedule and delivery schedule at that point; and
ii) provide the generated preface for storage.

15. An apparatus for data management, comprising:

means for determining a decoding schedule and a network delivery schedule for a set of data;
means for identifying a maximum difference between the decoding schedule and the delivery schedule and the last point in the decoding schedule at which the maximum difference occurs;
means for generating a preface by including in the preface one or more segments of data that sum to at least the identified maximum difference, the segments of data being selected to meet a constraint that the sum of bits to be included in the preface up to any point in the decoding schedule before the last point of maximum difference should be at least equal to the difference between the decoding schedule and delivery schedule at that point; and

means for providing the generated preface for storage.

Figure 1

Figure 2

Figure 3

Figure 4

EP 2 464 105 A1

## Figure 5

| | |
|---|---|
| 502 | ENCODED CONTENT |
| 504 | DECODING SCHEDULER |
| 508 | PREFACE SIZE CALCULATOR |
| 514 | PREFACE SIZE |
| 512 | NETWORK BIT RATE |
| 510 | DELIVERY SCHEDULER |

50

Figure 5

## Figure 6

RECEIVE VBR ENCODED CONTENT — B.6.2

DETERMINE VBR DECODING SCHEDULE — B.6.4

DETERMINE DELIVERY SCHEDULE FOR CONSTANT NETWORK BIT RATE — B.6.6

CALCULATE PREFACE AS MAXIMUM DIFFERENCE BETWEEN DECODING AND DELIVERY SCHEDULE — B.6.8

DETERMINE TIME (t) OF MAX DIFFERENCE — B.6.10

Figure 6

Figure 7

Figure 8

Figure 9

Figure 10

```
                    110
              ┌ ─ ─ ─│─ ─ ─ ─ ─ ─ ─ ─ ─ ─ ┐
              │                            │
              │    ┌──────────────┐        │
  1102 ──────────→│   ENCODED    │        │
              │    │   CONTENT    │        │
              │    └──────────────┘        │
              │                 │          │
              │    ┌──────────┐  │ ┌──────────┐  1106
              │    │ PREFACE  │  └→│ PREFACE  │──
  1104 ──────────→│   SIZE   │───→│ GENERATOR│  │
              │    └──────────┘    └──────────┘  │
              │                            │     │
              │                         ↓  │     │
  1108 ─┐     │ ┌──┬─┬──┬──┬──┬──┬─┬──┬────────┐ │
        └──────→│  │ │  │  │  │  │ │  │        │
              │ └──┴─┴──┴──┴──┴──┴─┴──┴────────┘
              │     └┬┘            ↑            │
              │      p             t            │
              └ ─ ─ ─ ─ ─ ─ ─ ─ ─ ─ ─ ─ ─ ─ ─ ─┘

                    Figure 11
```

```
        ┌──────────────────────┐
        │  RECEIVE VBR ENCODED │────── B.12.2
        │       CONTENT        │
        └──────────┬───────────┘
                   ↓
        ┌──────────────────────┐
        │ RECEIVE PREFACE MINIMUM │
        │ SIZE AND TIME (t) OF MAX│──── B.12.4
        │      SHORTFALL       │
        └──────────┬───────────┘
                   ↓
        ┌──────────────────────┐
        │  INCLUDE IN PREFACE  │
        │ SELECTED FRAME TYPE FROM│── B.12.6
        │ CONTENT FROM BEFORE TIME│
        │          (t)         │
        └──────────┬───────────┘
                   ↓
        ┌──────────────────────┐
        │  SUM OF SELECTED FRAME │──── B.12.8
        │ TYPE => PREFACE MINIMUM│         ┐
        │        SIZE?         │          │ Y
        └──────────┬───────────┘          │
                   │ N                     │
                   ↓                       │
        ┌──────────────────────┐          │
        │  INCLUDE IN PREFACE  │          │
        │ ADDITIONAL SELECTED  │          │
B.12.10─│ FRAMES FROM CONTENT  │          │
        │ FROM BEFORE TIME (t) │          │
        └──────────┬───────────┘          │
                   ↓                       │
        ┌──────────────────────┐          │
        │  OUTPUT PREFACE FOR  │←─────────┘
        │       STORAGE        │
        └──────────────────────┘──── B.12.12

               Figure 12
```

Figure 13

B.14.2

```
STORE VBR ENCODED
CONTENT AT STB
```

B.14.4

```
CALCULATE PREFACE SIZE
```

B.14.6

```
GENERATE PREFACE
```

B.14.8

```
DELETE FRAMES OTHER THAN
PREFACE FRAMES
```

Figure 14

B.15.2

```
RECEIVE VBR ENCODED
CONTENT AT MEDIA SERVER
```

B.15.4

```
CALCULATE PREFACE SIZE
```

B.15.6

```
GENERATE PREFACE
```

```
PUSH GENERATED PREFACE
TO STB
```

B.15.8

Figure 15

B.16.2

```
ENCODE CONTENT
```

B.16.4

```
CALCULATE PREFACE SIZE
FOR NETWORK BIT RATE
```

B.16.6

```
IDENTIFY FRAMES TO FORM
PART OF PREFACE
```

```
GENERATE META DATA
INDICATING IDENTIFIED
FRAMES FOR PUSH/DELETE
```

B.16.8

Figure 16

EP 2 464 105 A1

**EP 2 464 105 A1**

## EUROPEAN SEARCH REPORT

Europäisches Patentamt
European Patent Office
Office européen des brevets

Application Number

EP 10 25 2070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/161765 A1 (JOYCE GERALD [US] ET AL) 25 June 2009 (2009-06-25) | 1,2,4-7, 10-15 | INV. H04N5/783 |
| Y | * abstract * <br> * paragraph [0001] - paragraph [0002] * <br> * paragraph [0036] - paragraph [0037] * <br> * paragraph [0062] - paragraph [0068] * <br> ----- | 3,8,9 | |
| Y | WO 2008/088338 A1 (THOMSON LICENSING [FR]; YU SHENGCHAO [US]; GUO YANG [US]; MATHUR SAURA) 24 July 2008 (2008-07-24) <br> * abstract * <br> * page 4, line 22 - line 28 * <br> ----- | 3 | |
| Y | CN 100 442 835 C (LANGCHAO ELECTRONIC INF IND [CN]) 10 December 2008 (2008-12-10) <br> * page 4, line 8 - line 12 * <br> ----- | 8,9 | |
| A | EP 0 693 858 A2 (GOLD STAR CO [KR] LG ELECTRONICS INC [KR]) 24 January 1996 (1996-01-24) <br> * page 3, line 27 - line 32 * <br> ----- | 1-15 | |
| | | | TECHNICAL FIELDS SEARCHED (IPC) |
| | | | H04N |

The present search report has been drawn up for all claims

| Place of search | Date of completion of the search | Examiner |
|---|---|---|
| The Hague | 11 May 2011 | Lakic, Branka |

EPO FORM 1503 03.82 (P04C01)

**ANNEX TO THE EUROPEAN SEARCH REPORT
ON EUROPEAN PATENT APPLICATION NO.**

EP 10 25 2070

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2011

| Patent document<br>cited in search report | | Publication<br>date | Patent family<br>member(s) | | Publication<br>date |
|---|---|---|---|---|---|
| US 2009161765 | A1 | 25-06-2009 | WO | 2009082629 A1 | 02-07-2009 |
| WO 2008088338 | A1 | 24-07-2008 | CN | 101595731 A | 02-12-2009 |
| | | | EP | 2127377 A1 | 02-12-2009 |
| | | | JP | 2010517365 T | 20-05-2010 |
| | | | US | 2010281509 A1 | 04-11-2010 |
| CN 100442835 | C | 10-12-2008 | CN | 1812541 A | 02-08-2006 |
| EP 0693858 | A2 | 24-01-1996 | DE | 69515224 D1 | 06-04-2000 |
| | | | DE | 69515224 T2 | 21-06-2000 |
| | | | US | 5987212 A | 16-11-1999 |

EPO FORM P0459

For more details about this annex : see Official Journal of the European Patent Office, No. 12/82

**EP 2 464 105 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0658055 A